# EUROPEAN PATENT APPLICATION

(11) **EP 4 686 709 A1**
(43) Date of publication of application: **04.02.2026**
(21) Application number: 25193114.3
(22) Date of filing: 31.07.2025
(51) Int. Cl.: C03C 23/00, G02B 6/13, G02B 6/12

(54) **AN OPTICAL WAVEGUIDE**

(30) Priority: 31.07.2024 AU 2024902381
(71) Applicant: ELECTRO OPTIC SYSTEMS PTY. LIMITED, Symonston, ACT 2609 (AU)
(72) Inventor: FERNANDEZ, Toney Teddy, Adelaide, 5000 (AU); OTTEN, Dale Edward, Adelaide, 5000 (AU); LANCASTER, David George, Adelaide, 5000 (AU)
(74) Representative: J A Kemp LLP

(57) **Abstract**

The present disclosure relates to an optical waveguide device and a method for fabricating such a device in the field of mid-infrared photonics. The device comprises a fluoride glass substrate having localized concentrations of a chemical element at inscription points, with a waveguide inscribed along a defined path within the substrate. The waveguide is formed by directing focused ultrashort laser pulses into the substrate and scanning the pulses to induce migration and densification of the chemical element at the inscription points, resulting in a positive refractive index contrast. The fluoride glass substrate may include zirconium fluoride and modifiers such as barium fluoride, aluminium fluoride, and rare-earth elements to enable optical gain. The described technology further encompasses integrated photonic devices, including waveguide lasers comprising mirrors and gratings that define a lasing cavity for use in sensing, communication, and laser systems.

## Description

### TECHNICAL FIELD

The present invention relates to an optical waveguide device, a method of forming a waveguide and an optical device.

### BACKGROUND

Any references to methods, apparatus or documents of the prior art are not to be taken as constituting any evidence or admission that they formed, or form part of the common general knowledge.

The field of integrated photonics has seen remarkable advances in recent years, particularly in the development of optical waveguides for applications such as sensing, communication, and laser systems. Despite these advancements, creating efficient and reliable visible to mid-infrared (MIR) optical waveguides remains challenging due to material properties and fabrication techniques.

Traditional materials such as silicate, phosphate, and germanate glasses have been extensively studied for waveguide applications due to their suitable optical properties. However, these materials exhibit high phonon energies-approximately 1100 cm⁻¹ for silicates, 1250 cm⁻¹ for phosphates, and 900 cm⁻¹ for germanates. These high phonon energies result in substantial losses when these materials are used for mid-infrared applications, thereby limiting their effectiveness in this wavelength range.

Fluoride glasses, particularly those based on zirconium fluoride (ZrF₄), have shown considerable promise due to their lower phonon energy (400-600 cm⁻¹), broad transparency, low refractive index, and favourable thermal and mechanical properties. These characteristics make fluoride glasses particularly suitable for mid-infrared applications. However, producing high-quality waveguides in fluoride glasses has proven to be challenging.

Initial efforts to create waveguides in fluoride glasses involved ion exchange techniques, such as the exchange of fluoride ions with chlorine or alkali metal ions (e.g., lithium, sodium, potassium). Although some success was achieved, these methods often resulted in severe devitrification, slow exchange rates, and poor control over the waveguide structure. Additionally, using masking materials to define waveguide channels presented significant difficulties due to compatibility issues and the tendency of masks to corrode the glass surface.

Another approach attempted was the deposition of fluoride glass on substrates using physical vapor deposition. While this method offered some control over waveguide formation, it proved to be too complex and did not yield the desired high positive refractive index changes necessary for efficient MIR waveguiding.

The introduction of ultrashort (<10 ps) pulse laser micromachining presented a novel technique for fabricating waveguides in fluoride glasses. Initial studies demonstrated the ability to induce refractive index changes using ultrashort laser pulses. However, achieving a significant positive index change suitable for type-1 waveguides has been problematic. Early reports showed modest index changes (up to 3 x10⁻³), which were insufficient for practical MIR applications. Attempts to scale up the process often resulted in the formation of negative index change zones, which hindered the effective confinement of light within the waveguide.

A technical challenge in the field of mid-infrared photonics is developing a reliable and efficient method for fabricating high positive refractive index change type-1 waveguides in fluoride glasses. Existing techniques, including ion exchange, physical vapor deposition, and ultrashort-pulse laser micromachining, have failed to achieve the desired level of index change, control over waveguide structure, and low propagation losses necessary for practical applications. This lack of suitable fabrication methods has impeded the integration of Short to MIR optical waveguides into advanced photonic systems and devices, limiting their potential applications in areas such as sensing, communication, and laser technology.

### SUMMARY OF INVENTION

In an aspect, the invention provides an optical waveguide device comprising a fluoride glass substrate adapted to have concentration of a chemical element of the fluoride glass substrate at inscription points, and a waveguide inscribed within the fluoride glass substrate along a path defined by the inscription points, the waveguide having a positive index contrast exceeding 8x10⁻³.

In another aspect, the invention provides a waveguide formed in a fluoride glass substrate, the fluoride glass substrate being adapted to have concentration of a chemical element of the fluoride glass substrate at inscription points to form the waveguide therein, the waveguide having a positive index contrast exceeding 8x10⁻³.

In another aspect, the invention provides a method for forming an optical waveguide in a fluoride glass substrate comprising directing focused laser pulses into the fluoride glass substrate, and scanning the laser pulses across the substrate to inscribe a waveguide therein, thereby inducing a concentration of a chemical element within the fluoride glass substrate at or around inscription points, and forming a waveguide therein having a positive index contrast exceeding 8x10⁻³.

In an aspect, the invention provides an optical waveguide device comprising a fluoride glass substrate adapted or modified at inscription points to have a local increase in concentration of a chemical element of the fluoride glass substrate , a waveguide inscribed along a path defined by translating the inscription point three-dimensionally in any desired pattern within the substrate, and the waveguide having a positive index contrast exceeding 8 x 10⁻³.

In another aspect, the invention provides a waveguide formed in a fluoride glass substrate, the fluoride glass substrate being adapted or modified at inscription points to have a local increase in concentration of a chemical element of the fluoride glass substrate to form the waveguide therein, the waveguide having a positive index contrast exceeding 8x10⁻³.

In another aspect, the invention provides a method for forming an optical waveguide in a fluoride glass substrate comprising directing focused laser pulses into the fluoride glass substrate, and scanning the laser pulses across the substrate at a scanning speed to inscribe a waveguide therein, thereby inducing a local increase in concentration of a chemical element within the fluoride glass substrate at inscription points, and forming a waveguide therein having a positive index contrast exceeding 8 x 10⁻³.

In another aspect, the invention provides an optical waveguide device comprising a glass substrate adapted to have a concentration of a chemical element of the glass substrate at inscription points, and a waveguide inscribed within the glass substrate along a path defined by the inscription points, the waveguide having a positive index contrast exceeding 8 x10⁻³.

Preferably, the fluoride glass substrate comprises ZrF₄, and modifiers selected from the group consisting of BaF₂, AlF₃, NaF, ErF₃, YbF₃, and CeF₃.

Preferably, the waveguide has a cross-sectional area ranging from 1 µm² to 2500 µm² and, optionally, a length ranging from 1 mm to 50 mm.

Preferably, the fluoride glass substrate is adapted to have concentration of one or more chemical elements at the inscription points.

Preferably, the one or more chemical elements concentrated within the fluoride glass substrate is selected from the alkaline earth group (II) and/or the lanthanide series. Preferably, the one or more chemical elements concentrated within the fluoride glass substrate includes one or more of barium (Ba), cerium (Ce), ytterbium (Yb), strontium (Sr), calcium (Ca) and erbium (Er).

Preferably, the one or more chemical elements concentrated within the fluoride glass substrate includes one or more of lanthanum and cerium

Preferably, the positive index contrast is achieved through the densification of the fluoride glass substrate at or around the inscription points by way of increased concentration of the element thereabouts.

Preferably, the fluoride glass substrate further comprises rare-earth elements to enhance lasing properties.

Preferably, the waveguide is inscribed using an ultrashort pulse laser with a pulse duration in the range of 10 to 500 femtoseconds.

Preferably, the glass substrate comprises a composition having an amorphous character. More preferably, the fluoride glass substrate comprises a composition having an amorphous character.

Preferably, the glass substrate is a halogen glass substrate.

Preferably, the glass substrate or the fluoride glass substrate is primarily comprised of halogen anions, with oxide anion content less than 5 mol%.

Preferably, lanthanum (Ln) is not present and/or is excluded from the composition of the glass substrate.

Preferably, the laser pulses have a repetition rate ranging from 1 kHz to 200 kHz.

Preferably, the laser is scanned across the fluoride glass substrate at a scanning speed. Preferably, the scanning speed ranges from 5 micrometres per second (µm/s) to 500 micrometres per second (µm/s). More preferably, the scanning speed ranges from 40 to 150 µm/s.

Preferably, the energy per pulse of the laser ranges from 100 nJ to 10000 nJ.

Preferably, the laser pulses have a wavelength ranging from 190 nm to 1600 nm.

Preferably, the waveguides are formed by a single translation of the laser focal point.

Preferably, the waveguides are formed by multiple parallel translations of the inscription point, each separated orthogonally to the translation direction by 200 nm to 3500 nm.

Preferably, the waveguide is formed by continuous movement of the laser focal point along a predefined path within the fluoride glass substrate. Alternatively, the waveguide is formed by movement of the fluoride glass substrate through the laser focal point along a predefined path.

Preferably, the energy per pulse is within the range of 2 to 6 µJ.

Preferably, multiple scans are performed with a multi-scan pitch of 1 µm.

Preferably, a lasing cavity is formed using a broad band butt-coupled high-reflectivity (HR) mirror and a fiber Bragg grating to lase the active waveguides at a wavelength of approximately 1542.83 nm.

Preferably, the laser is configured with: energy per pulse within the range of 2 to 6 µJ, feed rates spanning from 40 to 150 µm/s, and a multi-scan pitch of 1 µm.

Preferably, the fluoride glass substrate contains elements selected to provide optical gain at one or more wavelengths within the range of 190nm to 7000 nm.

In an aspect, the invention provides an optical device comprising an optical waveguide device comprising:
a fluoride glass substrate adapted to have a concentration of a chemical element of the fluoride glass substrate at inscription points defining a waveguide path, and a waveguide inscribed within the substrate along the waveguide path, the waveguide having a positive index contrast exceeding 8x10⁻³;
a mirror located at one end of a waveguide formed in a substrate of the optical waveguide device, and
a grating located at an end of the waveguide opposite the mirror.

Preferably, the mirror is a high-reflectivity (HR) mirror designed to reflect a broad range of wavelengths. Preferably, the mirror is a broad band butt-coupled high-reflectivity (HR) mirror.

Preferably, the grating comprises an optical grating.

Preferably, the grating is a fiber Bragg grating (FBG) designed to reflect a specific wavelength or a range of wavelengths.

Preferably, the optical device further comprises a laser source configured to provide energy to the optical waveguide device to enable lasing.

Preferably, the mirror and the grating form a lasing cavity that operates at a wavelength of 1542.83 nm.

Preferably, the waveguide is formed by directing focused ultrashort laser pulses into the substrate and scanning the laser pulses across the substrate to inscribe the waveguide structure.

In another aspect, the invention provides an optical waveguide device comprising a fluoride glass substrate, and a waveguide inscribed within the substrate, the waveguide having a positive index contrast exceeding 8x10⁻³.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1 illustrates an optical waveguide device according to various embodiments;
Figure 2 illustrates a glass substrate prior to adaptations to concentrate elements therein;
Figure 3 illustrates the glass substrate indicating the inscription points and waveguide path defined by the laser pulses;
Figure 4 illustrates the glass substrate after being subject to the laser pulses which causes concentration of the element at or around the inscription points;
Figure 5 illustrates the optical waveguide device having a waveguide formed therein with the elements concentrated about the waveguide;
Figure 6 illustrates a method of forming a waveguide in a glass substrate;
Figure 7 illustrates an optical device incorporating the optical waveguide device according to various embodiments;
Figure 8 illustrates differential interference contrast microscope images of three waveguides which are 12*µ*m in width written with parameters of 50kHz, 4*µ*J (Feed rates and the waveguide inscription pitches are provided on respective images);
Figure 9 illustrates a refractive index map of a waveguide inscribed with an energy of 4 *µ*J, feed rate of 40*µ*m/s and a pitch of 1 *µ*m;
Figure 10 illustrates BSE, DIC and elemental map of waveguide inscribed with an energy of 4 *µ*J, feed rate of 40*µ*m/s and a pitch of 1 *µ*m. Ba, Ce, Yb and Er is seen enriching the positive index change zone whereas Na, Al, Zr were seen enriching the negative index change region;
Figure 11 illustrates propagated 3.5 *µ*m laser modes through the waveguide shown in Fig. 9 (see 11(a) and 11(b); and simulated modes corresponding to the same index map (see 11(c) and 11(d)) (The profiles of Poynting vectors in the propagation direction (*Sz* ) are shown);
Figure 12 illustrates a schematic of a compact laser cavity;
Figure 13 illustrates the physical setup of the laser cavity;
Figure 14 illustrates the lasing output obtained with 120mW 980 nm laser pumping; and
Figure 15 illustrates the lasing output obtained with120mW 980 nm laser pumping.

### DETAILED DESCRIPTION OF PREFERRED EMBODIMENTS

Embodiments of the present invention relate to optical waveguides within glass substrates. Optical waveguides are structures that guide light waves with minimal signal loss, making them essential components in photonics. Embodiments of the invention use ultrashort pulse laser technology to inscribe waveguides within glass substrates, resulting in waveguides that exhibit a high positive index contrast, thereby enhancing their optical properties.

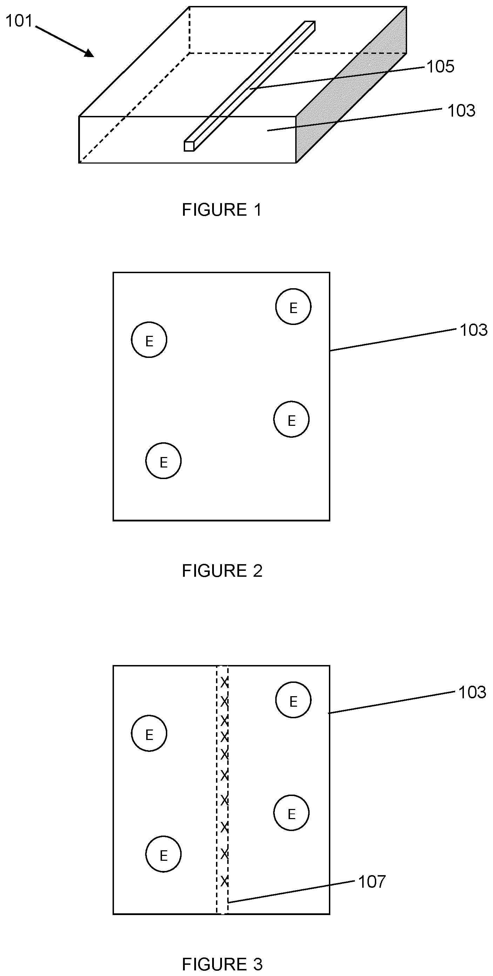

Figure 1 shows an optical waveguide device 101 according to various embodiments. The optical waveguide device 101 includes a glass substrate in the form of a fluoride glass substrate 103 and a waveguide 105 inscribed therein. The waveguide 105 is preferably an optical waveguide and multiple optical waveguides may be formed in the fluoride glass substrate 103.

The fluoride glass substrate 103 may comprise ZrF₄, and modifiers selected from the group consisting of BaF₂, AlF₃, NaF, ErF₃, YbF₃, and CeF₃.

In one embodiment, the fluoride glass substrate 103 comprises ZrF₄, BaF₂, *AlF*₃*, NaF,* ErF₃, *YbF*₃ and CeF₃. More specifically, the composition of the fluoride glass substrate 103 may be 51.3*ZrF*₄ 19*BaF*₂ 3*AlF*₃ 19.45NaF 0.5*ErF*₃ 1.75*YbF*₃ 5*CeF*₃ [mol%].

Due to potentially undesirable effects, lanthanum (Ln) may not be present and/or is excluded from the composition of the glass substrate in some embodiments.

While the above embodiment includes a fluoride glass substrate, it will be understood that other halogen glass substrates (such as chloride glass or bromide glass, for example) may be suitable. As such, while the fluoride glass substrate may be primarily comprised of halogen anions, with oxide content less than 5 mol%, this principle could apply to any glass substrate that is primarily comprised of halogen ions with oxide content less than 5 mol%. In an example, the fluoride glass substrate may be comprised of any cations attached mainly to fluorine anions and if there is any other anion present the concentration of those other anions should be less than 5 mol%

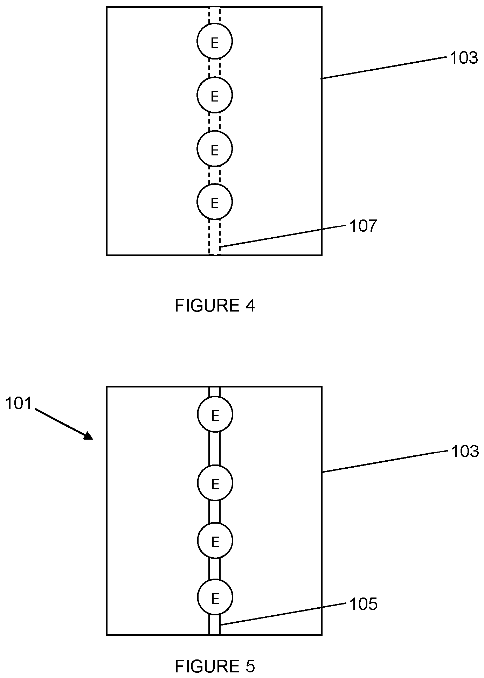

With reference to Figures 1 through 5, the fluoride glass substrate 103 is adapted to have concentration of a chemical element E of the fluoride glass substrate 105 at inscription points X defining a path that may be referred to as a waveguide path 107. This concentration of the chemical element E can also be defined as a local increase in concentration of the chemical element E at the inscription points. It should be noted that the concentration of element E is generally consistent in the untreated fluoride glass substrate. These inscription points X define a path within the substrate along which the waveguide 105 is inscribed. By concentrating a chemical element E at these inscription points X, the waveguide 105 exhibits a positive index contrast exceeding 8x10⁻³. In some embodiments, the waveguide 105 may exhibit positive index contrast exceeding 2x10⁻².

The fluoride glass substrate 103 may be adapted to have concentrations of multiple elements at or around the inscription points X to further enhance the optical properties of the waveguide 105.

Concentration of the element E (which may be also thought of as the first element for some applications and embodiments) of the glass substrate is to be understood as a relative concentration of that element E within the glass substrate at or around the inscription points X. As such, concentration of the element E of the glass substrate involves movement or migration of the element from a first point or region of the glass substrate (as shown in Figure 2, for example) to a second point in the form of an inscription point X (as shown in Figures 3 through 5) which is induced by a laser according to methods to be described below. For completeness, it will be understood that the above refers to proximate element E migrating towards the inscription points. As such, element E may still be present at distal areas of the fluoride glass from the inscription points. Furthermore, a gradient may be present adjacent inscription points. Alternatively, or in addition to the above, concentrating the chemical element may be understood as increasing the density of that chemical element at and/or around the inscription points.

**In** some embodiments, concentration of the element E at or around the inscription points X may involve the migration or exchange of a second element (not shown) away from the inscription points X, such that the second element moves from the second point (the inscription point X) to the first point previously occupied by the element E (the first element).

The element E concentrated within the glass substrate, and in particular the fluoride glass substrate 103 as it is in some embodiments, may be selected from a group including, and in some embodiments, consisting of, barium (Ba), cerium (Ce), ytterbium (Yb), erbium (Er), strontium (Sr), and calcium (Ca).

In some embodiments, the chemical element concentrated within the fluoride glass substrate includes one or more of lanthanum and a rare earth element. For example, the chemical element concentrated within the fluoride glass substrate may include lanthanum and one or more of cerium, ytterbium and erbium. In another example, the chemical element concentrated within the fluoride glass substrate may include one or more of cerium, ytterbium and erbium.

In some embodiments, the waveguide 105 may have a length ranging from 1 mm to 50 mm. In some embodiments, the waveguide 105 may have a length of at least 10mm. In some other embodiments, the waveguide 105 may have a length of at least 12mm.

The waveguide 105 formed in the glass substrate may have a cross-sectional diameter or width of between 2 micrometres and 50 micrometres. In some embodiments, the waveguide 105 may have a cross-sectional diameter or width of between 12 micrometres and 14 micrometres. In some embodiments, the waveguide 105 may have a cross-section width of around 12 micrometres. In some embodiments, the waveguide 105 may have a cross-sectional height of 14 micrometres. In one embodiment, the waveguide 105 is approximately 12 micrometres in width and approximately 14 micrometres in height.

In some embodiments, the waveguide has a cross-sectional area ranging from 1 µm² to 2500 µm². The cross-sectional diameter and/or area provided by embodiments of the waveguides disclosed herein is smaller than waveguides, such as depressed cladding waveguides, for example, achievable through some known techniques. This makes embodiments of the disclosed waveguides particularly suitable for photonic applications, including photonic integrated circuits (PICs).

As mentioned above, the optical waveguide device 101 can be produced by forming the optical waveguide 105 in the glass substrate through direct laser writing. The method for which will be described below.

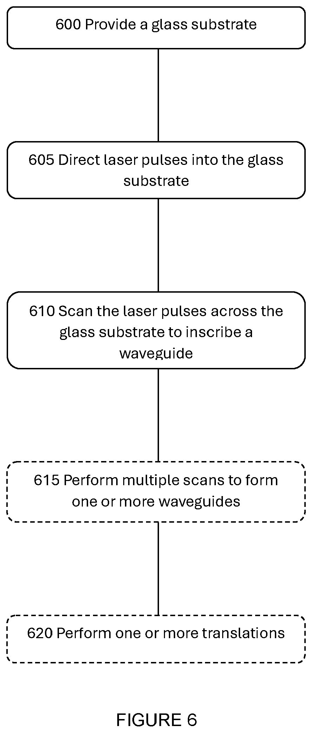

In Figure 6, a method for forming an optical waveguide in a glass substrate is shown.

In a first step, a glass substrate is provided at step 600.

In a second step, laser pulses are directed into the glass substrate at step 605. The laser pulses may be focused, ultrashort laser pulses.

In a third step, the laser pulses are scanned across the glass substrate to inscribe a waveguide therein at step 610.

The laser pulses create a localized modification in the glass substrate, enhancing the refractive index at the inscription points. Therefore, the waveguide may be understood to be formed by continuous movement of the laser focal point along a predefined path (or waveguide path) within the glass substrate.

The scanning may be performed at a defined scanning speed and may include one or more scans. In some embodiments, at step 615, multiple scans are performed. In some embodiments, multiple scans are performed at a pitch of between approximately 1 micrometre to approximately 2.5 micrometres. In some embodiments, the pitch between scans is anywhere between approximately 1 micrometre to approximately 2 micrometres. In some embodiments, the pitch is 1 micrometre, or 1.5 micrometres, or 2 micrometres.

The scanning may also include one or more translations at optional step 620. In some embodiments, the waveguides are formed by a single translation of the laser pulses. In some embodiments, the waveguides are formed by multiple parallel translations of the inscription point, each separated orthogonally to the translation direction by 200 nm to 3500 nm .

The combination of the laser pulses directed at the glass substrate during scanning induces concentration of a chemical element within the glass substrate at or around inscription points, thereby increasing density of the chemical element at or around the inscription points, and forming a waveguide therein having a positive index contrast exceeding 2x10⁻², and, in some embodiments, exceeding 8x10⁻³.

In one embodiment, a fluoride glass substrate as described throughout is provided at step 600.

At step 605, focused, ultrashort laser pulses are directed into the fluoride glass substrate.

**In** some embodiments, the laser pulses have a repetition rate ranging from 1kHz to 200kHz. **In** some embodiments, the repetition rate of around 50kHz.

**In** some embodiments, the energy per pulse ranges from 100 nanojoules to 10000 nanojoules. **In** some embodiments, the energy per pulse ranges from 2000 nanojoules to 6000 nanojoules, and may be in the range of 2000 nanojoules to 5000 nanojoules. **In** some embodiments, the energy per pulse may be around 2 microjoules or 2000 nanojoules. **In** some embodiments, the energy per pulse may be around 4000 nanojoules.

**In** some embodiments, the laser pulses have a wavelength ranging from 190 nm to 1600 nm. **In** some embodiments, the laser pulses have a wavelength of 1030 nm.

In step 610, the laser pulses are scanned across the glass substrate at scanning speed to inscribe a waveguide therein at or around inscription points defined by the scanning of the laser. The scanning speed may be in the range of 5 micrometres per second to 500 micrometres per second. In some embodiments, the scanning speed may be in the range of 40 micrometres per second to 150 micrometres per second. In some embodiments, the scanning speed may be around 80 micrometres per second. In other embodiments, the scanning speed may be around 40 micrometres per second. In some embodiments, the scanning speed may be one of 40 micrometres per second, 80 micrometres per second, 120 micrometres per second and 150 micrometres per second.

The laser pulses may have a pulse duration in the range of 10 femtoseconds to 500 femtoseconds. In some embodiments, the laser pulses may have a pulse duration of 240 femtoseconds.

The laser pulses may be focussed using a focussing device. For example, one or more of a microscope objective or lens or curved mirrors may be used to focus laser spot to a diameter of 250 nm to 50 um.

As described above, this induces concentration of a chemical element (such as barium, for example) within the fluoride glass substrate at or around inscription points defined by the scanning of the laser, and forms a waveguide therein having a positive index contrast exceeding 2x10⁻², and, in some embodiments, exceeding 8x10⁻³.

In some embodiments, the chemical element concentrated within the fluoride glass substrate includes one or more rare-earth elements.

In some embodiments, the chemical element concentrated within the fluoride glass substrate is selected from the alkaline earth group (II) and/or the lanthanide series.

In some embodiments, the fluoride glass substrate contains (or is doped with) elements selected to provide optical gain at one or more wavelengths within the range of 190nm to 7000 nm. These elements selected to provide optical gain may comprise rare earth elements.

### Exemplary Embodiment of the Optical Waveguide Device

In one embodiment, the fabrication conditions for forming the waveguide 105 in the glass substrate 103 include energy per pulse within the range of 2 to 6 *µ*J, feed rates spanning from 40 to 150 *µ*m/s, and a multi-scan pitch of 1 *µ*m. The resulting waveguides are approximately 12 *µ*m in width and 14 *µ*m in height, which then yield a multimoded behaviour at 3.5 *µ*m wavelength and the waveguide has propagation losses as low as 0.21 dB/cm measured at a wavelength of 1.62 *µ*m.

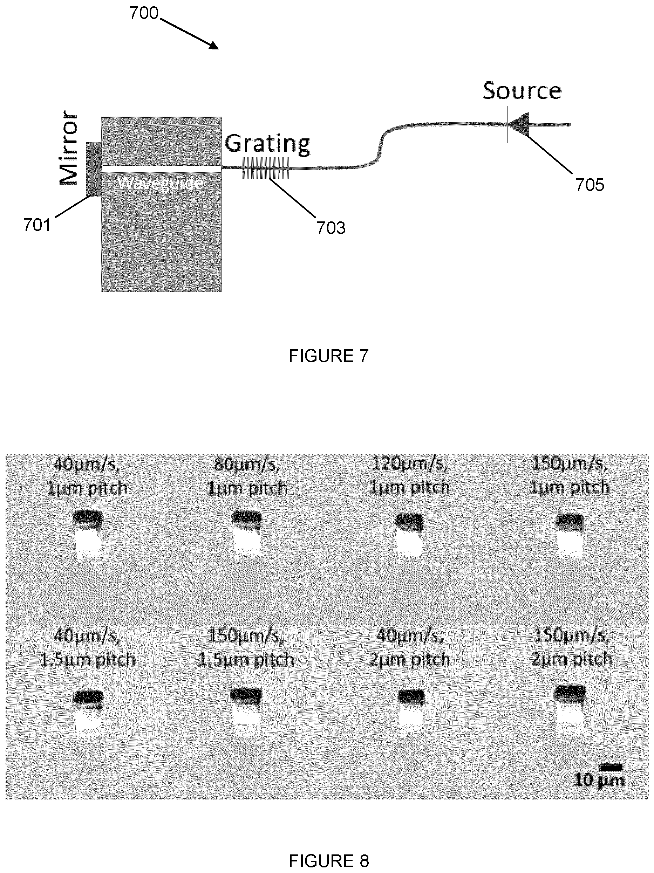

The optical waveguide device 101 can be incorporated into an optical device 700, which can be seen at Figure 7.

The optical device 700 includes an optical waveguide device 101 according to various embodiments described herein, a mirror 701 located at one end of the waveguide formed in the glass substrate of the optical waveguide device 101, and a grating 703 located at an end of the waveguide opposite the mirror 701.

The arrangement of the mirror 701 and grating 703 at opposed ends of the waveguide forms a cavity that can be used to lase the waveguides at desired wavelengths and thus can be used to form a waveguide laser.

The mirror 701 may take the form of a high-reflectivity mirror that reflects a broad range of wavelengths. In one embodiment, the mirror 701 takes the form of a broad band butt-coupled high-reflectivity mirror.

The grating 703 may take the form of an optical grating, although other gratings, such as diffraction gratings or distributed feedback gratings, for example, may be used.

In some embodiments, an optical grating in the form of a distributed feedback (DFB) grating may be written directly into the waveguide for the purposes of providing a distributed feedback laser.

In some embodiments, an optical grating in the form of a Fiber Bragg Grating (FBG) is provided to reflect a specific wavelength or a range of wavelengths as required.

The optical device 700 may include a laser source 705 to provide energy to the waveguide.

### Exemplary Embodiment of the Optical Device

In one embodiment, an optical device includes a laser source connected to a Fiber Bragg Grating (FBG) located at an end of a waveguide formed in a fluoride glass substrate as described throughout. At an opposite end of the waveguide, there is located a broad band butt-coupled high-reflectivity, thereby forming a cavity in conjunction with the FBG.

The laser source is configured to provide light or energy at a wavelength of 976 nm at 120 mW through a medium (such as a fibre, for example) connected to the FBG.

This embodiment has been observed to have an emission peak centred at around 1542.83 nm.

### Experimental Results

A composition that is commonly used for ultrashort pulse laser inscription is: 53*ZrF*₄ 20*BaF*₂ 3*LaF*₃ 4*AlF*₃ 20*NaF* (mol%). Apart from index variation, optical, mechanical, and thermal property tuning can be achieved by varying the modifiers within the composition.

In the following discussion, there is a focus on revising the network modifiers rather than the formers within the general ZBLAN composition.

To further increase the magnitude of positive index achieved with laser inscription, *LaF*₃ was eliminated, leaving the glass with one multivalent glass modifier, as *AlF*₃ is essentially a conditional glass former. The final composition was: 51.3*ZrF*₄ 19*BaF*₂ 3*AlF*₃ 19.45NaF 0.5*ErF*₃ 1.75*YbF*₃ 5*CeF*₃ (mol%).

Rare-earth elements were doped to use the waveguide for fabricating a chip laser. Ce³⁺ was doped to increase the 1.5*µ*m erbium emission by resonance energy transfer between Er³⁺ in the 4*I*_{11/2} state and Ce³⁺ in the 4*F*_{7/2} state, promoting the radiative 4*I*1_{3/2} →4*I*1_{5/2} 1.5*µ*m emission in the former. The glasses were prepared using the conventional melt-quenching technique at the Le Verre Fluore industrial facility in Brittany, France.

A Pharos femtosecond laser system, operating at a central wavelength of 1030 nm, with a pulse duration of 240 fs and a repetition rate of 50 kHz, was used to inscribe the final waveguides.

Lower repetition rates provide ideal inscription windows for multiscan waveguides in fluoride glasses. Therefore, a parameter search for this recomposed glass was performed, ranging from 1 to 250 kHz. 50 kHz was found to be ideal for producing high positive index change waveguides. Introducing a precise amount of spherical aberration by detuning the focusing objective (Olympus, LUCPlan FL N, 0.6 NA, 40X) collar position helped optimize the achievable index change of the waveguide.

It was found that a 500 *µ*m collar position was optimal. All waveguides were inscribed at a depth of 170 *µ*m.

The waveguides within the glass sample were multiscan type-1 whose differential interference contrast (DIC) microscope image is as shown in Figure 8. A single laser scan pass produced a modification strand of waveguide which is approximately 1 *µ*m wide and 12-14 *µ*m tall. 12 *µ*m wide waveguides were fabricated by laterally shifting each scan by a preset pitch of 1, 1.5, 2, 2.5*µ*m. The total number of scans were adjusted to maintain the waveguide width to be 12 *µ*m. The best window of fabrication in terms of morphology were inscribed with energy per pulse ranging between 2-6 *µ*J, feed rates ranging between 40-150 *µ*m/s and a multiscan pitch of 1 *µ*m. Outside this window the index contrast is either weak or they sustained strong cracks. Figure 8 shows that the waveguides have the negative index change (black) on the top and the positive index change on the bottom side (white) which is characteristic to multiscan waveguides.

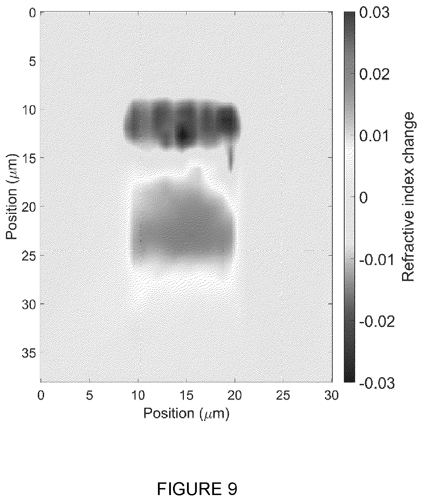

The refractive index changes of the waveguides were measured using Rinck near field refractometer as shown in Figure 9. The waveguide was fabricated with an energy of 2 *µ*J and a feed rate of 80*µ*m/s. The positive index change of this waveguide was as high as 2 x 10⁻². The substantial decrease in the index atop the waveguide increases the effective index seen by a propagated mode.

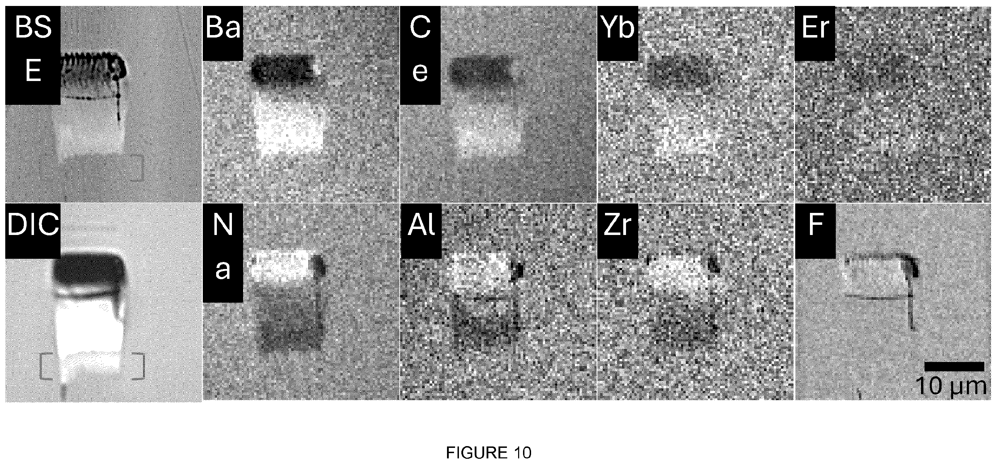

The positive refractive index change has been linked to material densification which is clearly discernible in the backscattered electron (BSE) microscope image (Figure 10) using Z-contrast, where Z corresponds to atomic number. The negative index region exhibited presence of nano voids, a phenomenon previously documented in studies on multiscan waveguides in both ZBLAN and fused silica. Notably, a distinct horizontal string of nanovoids was observed to be disconnected from the primary negative index zone. Furthermore, a strip of material located at the base of the waveguide, as indicated by red brackets in the differential interference contrast (DIC) image, was absent in both the backscattered electron (BSE) image and the elemental mapping. This absence can be attributed to a heat-induced diffusion or a change in polarizability, which manifests solely as an alteration in refractive index, without producing a difference in the BSE image or elemental mapping. This behaviour has been extensively elucidated in the context of fused silica.

Through a comprehensive elemental mapping of the waveguides and their surroundings, the Inventors have found that the positive index contrast is primarily as a result of the densification caused by the migration of certain elements within the fluoride glass substrate. These certain elements have been identified as Ba (barium), Ca (calcium), Sr (strontium), Ce (cerium), Yb (ytterbium) and Er (erbium). It is posited by the Inventors that given an observed higher concentration of Ba in the fluoride glass substrate and the potential for the Ce signal to overlap with Ba, thereby imitating the behaviour of Ba, that Ba is the principal contributor to the positive index contrast. The Inventors found that certain alkaline earth group (Group II) and lanthanides series elements were observed to migrate away from the zone exhibiting a negative index contrast into the region exhibiting positive index contrast. Conversely, the Inventors found that there was a migration of Na (Sodium), Zr (Zirconium) and Al (Aluminium) from the positive index contrast region to the negative index contrast region.. That is, these elements were found to be accumulating in the region displaying a negative index change. Fluorine was observed accumulated in the negative index contrast zone with no drainage or migration from elsewhere. The Inventors believe this Z-contrast arises from the microvoids filled with fluorine gas similar to observations reported in silicate glasses.

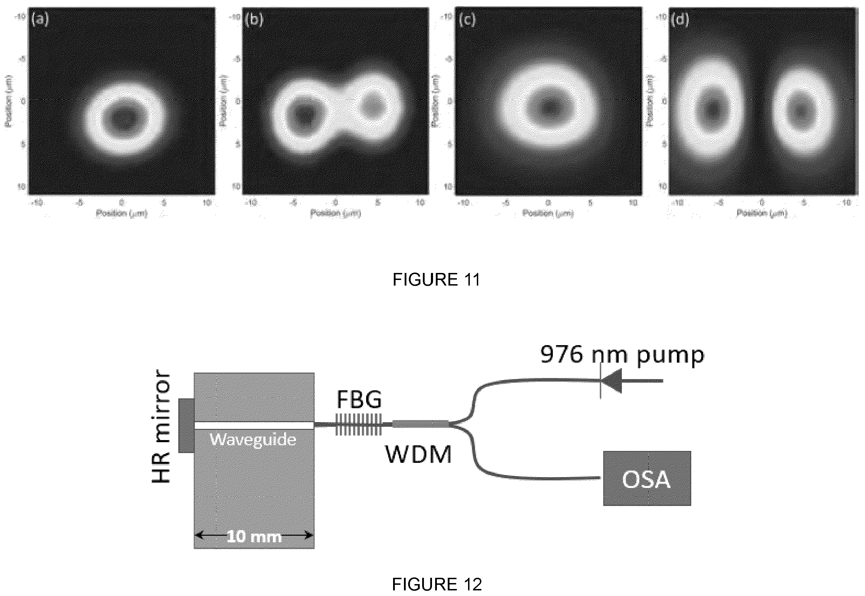

A 3.5 *µ*m diameter laser mode was propagated through the waveguides and owing to its high index change, they were multimoded. Experimentally we could observe two modes, a fundamental mode and a higher order mode. The lateral shifting of the fibre that launches the laser mode into the waveguide helps us to excite the higher order mode and/or the fundamental mode (Figures 11(a) and 11(b)). The refractive index map obtained from Rinck measurement were used to simulate guided modes supported by the waveguide and found to be in complete agreement with the experimental observations (Figures. 11(c) and 11(d)). The simulation was done using FemSIM^{™} which is a mode solver software based on the Finite Element Method (FEM).

The glass sample was doped with Er³⁺, Yb³⁺ and Ce³⁺ to design a waveguide laser operating in the C communication band. Ce³⁺ was doped to increase the 1.5 *µ*m erbium emission by resonance energy transfer between Er³⁺ in the 4*I*_{11/2} state and Ce3+ in 4*F*_{7/2} state promoting the radiative 4*I*_{13/2} → 4*I*_{15/2} 1.5 *µ*m emission in the former. Since a large parameter space was explored to produce several waveguides, all exhibiting multimode behaviour at 3.5 *µ*m, necessitated the selection of the most suitable candidate for laser operation. The 1.5 *µ*m wavelength in those waveguides should be highly multimoded and using a fibre Bragg grating on a single mode fibre may introduce large coupling losses unless mode-overlap between the fibre mode and the fundamental mode of the waveguide is near unity (low excitation of higher order modes) at the waveguide to fibre transition. Hence the best parameter to select would be the insertion loss measured using a multimode fibre, close to the lasing wavelength but outside the absorption band.

1.62 *µ*m was chosen to be the loss measurement wavelength and the best inscription window that produced low loss waveguides were the ones that was written with a pitch of 1 *µ*m, feed rate between 40-150 *µ*/s and energies ranging 2-5 *µ*J. The 12 mm long waveguide written with an energy of 4 *µ*J, 40 *µ*/s with a pitch of 1 *µ*m demonstrated a lowest insertion loss of 0.21 dB/cm.

This waveguide was incorporated into a laser cavity whose schematic is shown in Figure 12.

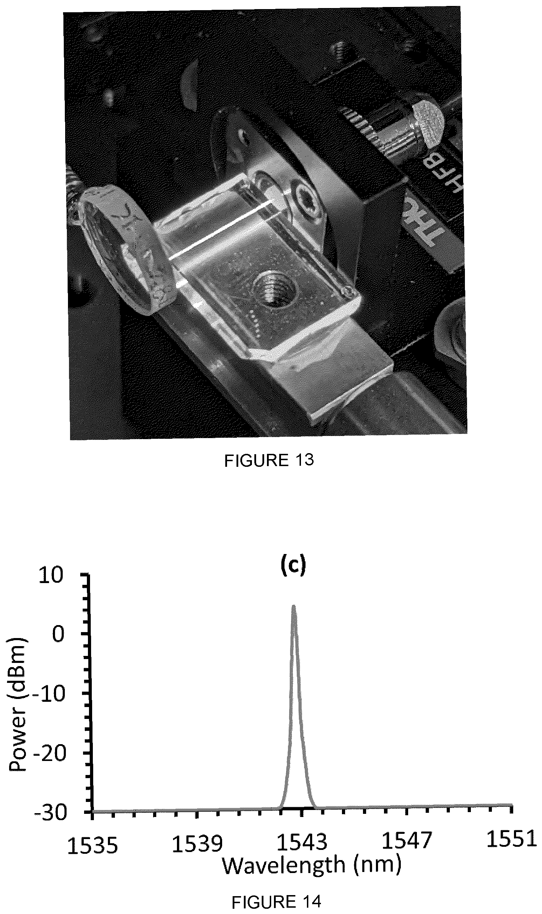

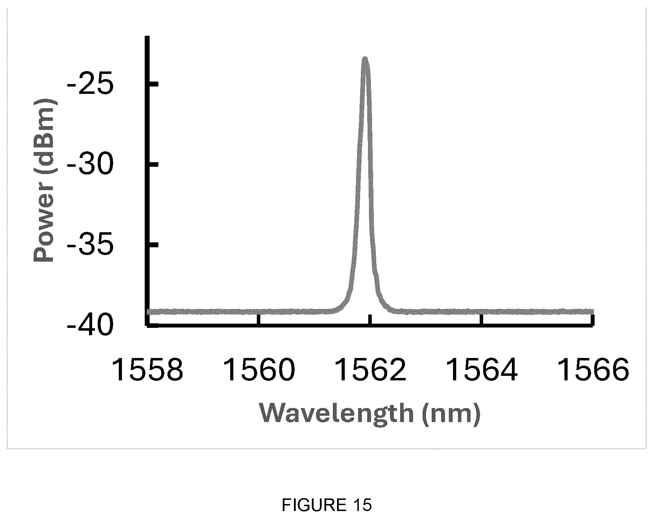

The actual photo of the setup is shown in Figure 13 highlighting the 980 nm laser pumped waveguide and the green emission is due to Er³⁺:4*S*_{3/2} →4 *I*_{15/2} via excited state absorption. Figure 14 shows the laser emission peak centred at 1542.83 nm. In another instance using the same configuration, Figure 15 shows the laser emission peak centred at 1561.9 nm.

Embodiments of the invention described herein provide improved integrated optical elements in fluoride glasses for mid-infrared applications.

Embodiments of the invention can be shown to provide optical waveguides with a positive refractive index change, exceeding 8 × 10⁻³ and, in some embodiments, exceeding 2x10⁻². The index change is attributed to material densification driven mainly by the migration of barium in the revised fluoride glass composition. Such a strong migration to form optical waveguides eluded in the past when waveguides were inscribed in the general composition which contained lanthanum fluoride. Altered compositions described herein allowed the migration of heavy barium atoms to positive index zone densifying with an increase in local index.

Embodiments of the invention described herein provide improved integrated optical elements in fluoride glasses for visible to mid-infrared applications.

Embodiments of the invention are shown to provide optical waveguides with high positive refractive index change, exceeding 8x10⁻³, and in some embodiments, exceeding 2x10⁻².

In compliance with the statute, the invention has been described in language more or less specific to structural or methodical features. The term "comprises" and its variations, such as "comprising" and "comprised of" is used throughout in an inclusive sense and not to the exclusion of any additional features.

It is to be understood that the invention is not limited to specific features shown or described since the means herein described comprises preferred forms of putting the invention into effect.

The invention is, therefore, claimed in any of its forms or modifications within the proper scope of the appended claims appropriately interpreted by those skilled in the art.

## Claims

1. An optical waveguide device comprising:
a fluoride glass substrate adapted to have concentration of a chemical element of the fluoride glass substrate at inscription points, and
a waveguide inscribed within the fluoride glass substrate along a path defined by the inscription points,
the waveguide having a positive index contrast exceeding 8x10⁻³.

2. The optical waveguide device of claim 1, wherein the concentration of the chemical element is a local concentration at the inscription points.

3. The optical waveguide device of claim 1 or claim 2, wherein the fluoride glass substrate comprises a composition having an amorphous character.

4. The optical waveguide device of claim 1 or claim 2, wherein the fluoride glass substrate is primarily comprised of halogen anions, with oxide content less than 5 mol%.

5. The optical waveguide device of claim 1 or claim 2, wherein the fluoride glass substrate comprises ZrF₄, and modifiers selected from the group consisting of BaF₂, AlF₃, NaF, ErF₃, YbF₃, and CeF₃.

6. The optical waveguide device of any one of claims 1 to 5, wherein the fluoride glass substrate is adapted to have concentration of one or more chemical elements at the inscription points.

7. The optical waveguide device of claim 6, wherein the chemical element concentrated within the fluoride glass substrate includes one or more rare-earth elements.

8. The optical waveguide device of claim 6, wherein the chemical element concentrated within the fluoride glass substrate is selected from the alkaline earth group (II) and/or the lanthanide series.

9. The optical waveguide device of claim 6, wherein the chemical element concentrated within the fluoride glass substrate includes one or more of barium, strontium, and calcium.

10. The optical waveguide device of claim 6, wherein the chemical element concentrated within the fluoride glass substrate includes one or more of lanthanum and cerium.

11. A method for forming an optical waveguide in a fluoride glass substrate comprising:
directing focused laser pulses into the fluoride glass substrate; and
scanning the laser pulses across the substrate to inscribe a waveguide therein, thereby inducing concentration of a chemical element within the fluoride glass substrate at inscription points, and forming a waveguide therein having a positive index contrast exceeding 8 × 10⁻³.

12. The method of claim 11, wherein scanning the laser pulses across the substrate to inscribe the waveguide therein induces a local increase in concentration of the chemical element within the fluoride glass substrate at the inscription points.

13. The method of claim 11 or claim 12, wherein the laser pulses have a repetition rate ranging from 1 kHz to 200 kHz.

14. The method of claim 11 or claim 13, wherein the laser pulses have a wavelength ranging from 190 nm to 1600 nm.

15. The method of any one of claims 11 to 14, wherein the laser is scanned across the fluoride glass substrate at a scanning speed ranging from 5 micrometres per second to 500 micrometres per second.
